# EUROPÄISCHE PATENTANMELDUNG

(11) **EP 3 522 605 A1**
(43) Veröffentlichungstag der Anmeldung: **07.08.2019**
(21) Anmeldenummer: 18154465.1
(22) Anmeldetag: 31.01.2018
(51) Int. Cl.: H04W 40/12, H04W 84/20

(54) **FUNK-KOMMUNIKATIONSSYSTEM FÜR EIN INDUSTRIELLES AUTOMATISIERUNGSSYSTEM UND VERFAHREN ZUM BETRIEB EINES FUNK-KOMMUNIKATIONSSYSTEMS**

(71) Anmelder: Siemens Aktiengesellschaft, 80333 München (DE)
(72) Erfinder: Richter, Siegfried, 91207 Lauf (DE); Riedl, Johannes, 84030 Ergolding (DE); Walewski, Joachim, 82008 Unterhaching (DE); Zeiger, Florian, 85635 Höhenkirchen-Siegertsbrunn (DE); Kloiber, Bernhard, 83620 Feldkirchen-Westerham (DE)

(57) **Zusammenfassung**

Ein Funk-Kommunikationssystem für ein industrielles Automatisierungssystem umfasst zumindest ein als Funk-Basisstation betriebenes erstes Kommunikationsgerät (201) und mehrere als Funk-Teilnehmerstationen betriebene zweite Kommunikationsgeräte (202-204). Das erste Kommunikationsgerät ist auf einem Fahrzeug angeordnet oder verfahrbar. Das erste Kommunikationsgerät und die zweiten Kommunikationsgeräte sind einer Kommunikationsgerätegruppe zuordenbar und nur innerhalb derselben Kommunikationsgerätegruppe drahtlos miteinander verbindbar. Das erste Kommunikationsgerät und die zweiten Kommunikationsgeräte ermitteln innerhalb ihrer zugeordneten Kommunikationsgerätegruppe anhand von Signalstärkemesswerten bzw. Positionsdaten Abstände zwischen dem ersten Kommunikationsgerät und dem jeweiligen zweiten Kommunikationsgerät. In Abhängigkeit von den ermittelten Abständen teilt das erste Kommunikationsgerät für eine Funk-Kommunikation mit dem jeweiligen zweiten Kommunikationsgerät Funk-Ressourcen zu.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In Erik Westerberg "4G/5G RAN architecture", Ericsson Technology Review, July 22, 2016, ISSN 0014-0171-284 23-3283 wird eine Architektur für 4G- und 5G-Mobilfunksysteme vorgeschlagen, die eine erhöhte Spektral-Effizienz und eine verbesserte Flexibilität bei einer Realisierung von Mobilfunksystemen bietet. Die Architektur umfasst auf Nutzerebene eine Paketverarbeitungsfunktion (Packet Processing Function - PPF) und eine Basisband-Signalverarbeitungsfunktion (Baseband Processing Function - BPF). Zusätzlich sind in der Architektur eine antennennahe Funk-Funktion (Radio Function - RF) und eine Funksteuerungsfunktion (Radio Control Function - RCF) auf Steuerungsebene vorgesehen. Die Paketverarbeitungsfunktion und die Basisband-Signalverarbeitungsfunktion können entweder in Netzwerkknoten integriert oder in einer virtualisierten Umgebung betrieben werden, wobei Mischformen möglich sind.

Aus EP 2 712 124 A1 ist ein redundant betriebenes industrielles Kommunikationssystem mit redundant an ein industrielles Kommunikationsnetz angebundenen Kommunikationsgeräten bekannt, bei dem eine Nachrichtenübermittlung zumindest abschnittsweise kabellos erfolgt. Im industriellen Kommunikationsnetz ist eine Mehrzahl von Puffer-Speichereinheiten für an einem Netzknoten kabelgebunden empfangene und von diesem kabellos zu sendende Nachrichtenelemente vorgesehen. Bei Überschreiten einer maximalen Puffer-Größe wird ein ältestes in der jeweiligen Puffer-Speichereinheit befindliches Nachrichtenelement gelöscht. Bis zu einem Überschreiten der maximalen Puffer-Größe wird das älteste Nachrichtenelement als nächstes kabellos zu sendendes Nachrichtenelement ausgewählt.

Entsprechend EP 3 211 838 A1 ist in einem redundant betreibbaren industriellen Kommunikationssystem ein erstes Kommunikationsgerät mit Redundanzfunktion über einen ersten und zweiten Kommunikationsnetzanschluss redundant an einen ersten Switch o.ä. angeschlossen. Analog dazu ist ein zweites Kommunikationsgerät mit Redundanzfunktion über einen ersten und zweiten Kommunikationsnetzanschluss redundant an einen zweiten Switch o.ä. angeschlossen ist. Vom ersten Kommunikationsnetzanschluss des ersten und des zweiten Kommunikationsgeräts an den jeweiligen Switch übermittelte Datenrahmen werden einem ersten virtuellen lokalen Netz zugeordnet, während vom zweiten Kommunikationsnetzanschluss des ersten und des zweiten Kommunikationsgeräts an den jeweiligen Switch übermittelte Datenrahmen einem zweiten virtuellen lokalen Netz zugeordnet werden. Dem ersten virtuellen lokalen Netz zugeordnete Datenrahmen werden mittels einer jeweiligen ersten Funk-Transceiver-Station über ein erstes Funknetz gesendet, während dem zweiten virtuellen lokalen Netz zugeordnete Datenrahmen mittels einer jeweiligen zweiten Funk-Transceiver-Station über ein zweites Funknetz gesendet werden.

EP 3 211 962 A1 betrifft ein Funk-Kommunikationssystem für ein industrielles Automatisierungssystem, bei dem zumindest ein erstes und ein zweites Kommunikationsgerät redundant an ein industrielles Kommunikationsnetz angebunden sind. Das erste und das zweite Kommunikationsgerät sind jeweils über ihren ersten und über ihren Kommunikationsnetzanschluss mittel- oder unmittelbar mit einer jeweiligen ersten und mit einer jeweiligen zweiten Funk-Transceiver-Station verbunden. Die ersten und zweiten Funk-Transceiver-Stationen legen eine Reihenfolge für innerhalb eines vorgegebenen Zeitintervalls zu sendende Datenrahmen anhand den zu sendenden Datenrahmen zugeordneter Ziel-MAC-Adressen fest. Die Reihenfolge innerhalb an eine ausgewählte Ziel-MAC-Adresse zu sendender Datenrahmen wird durch ihre Eingangsreihenfolge festgelegt.

Der vorliegenden Erfindung liegt die Aufgabe zugrunde, ein Funk-Kommunikationssystem für ein industrielles Automatisierungssystem mit mobilen Kommunikationsteilnehmern zu schaffen, das eine effiziente und störungsarme Funk-Ressourcennutzung ermöglicht, ein Verfahren zu dessen Betrieb sowie geeignete Systemkomponenten anzugeben.

Diese Aufgabe wird erfindungsgemäß durch ein Funk-Kommunikationssystem mit den in Anspruch 1 angegebenen Merkmalen, durch eine Funk-Basisstation mit den in Anspruch 15 angegebenen Merkmalen und durch ein Verfahren mit den in Anspruch 16 angegebenen Merkmalen gelöst. Vorteilhafte Weiterbildungen der vorliegenden Erfindung sind in den abhängigen Ansprüchen angegeben.

Das erfindungsgemäße Funk-Kommunikationssystem für ein industrielles Automatisierungssystem umfasst zumindest ein als Funk-Basisstation betriebenes erstes Kommunikationsgerät, das zumindest eine Funk-Transceivereinheit aufweist, und mehrere als Funk-Teilnehmerstationen betriebene zweite Kommunikationsgeräte, die jeweils drahtlos mit dem ersten Kommunikationsgerät verbindbar sind und zumindest eine Funk-Transceivereinheit aufweisen. Das erste Kommunikationsgerät ist auf einem Fahrzeug angeordnet bzw. verfahrbar. Demgegenüber sind übliche Funk-Basisstationen fest angeordnet und nicht mobil. Das erste Kommunikationsgerät und die zweiten Kommunikationsgeräte können beispielsweise einem Wireless Local Area Network, einem WiMAX-, einem UMTS-, einem LTE-, einem 5G-Mobilfunknetz oder einem sonstigen Mobilfunknetz zugeordnet sein. Vorzugsweise sind das erste Kommunikationsgerät und die zweiten Kommunikationsgeräte für eine CSMA-Kollisionsvermeidung bzw. zur Anwendung von Listen Before Talk ausgestaltet und eingerichtet. Darüber hinaus ist das erste Kommunikationsgerät vorteilhafterweise zur Bearbeitung eines Mobility Management Entity bzw. Serving Gateway Protokollstacks ausgebildet und eingerichtet.

Erfindungsgemäß sind das erste Kommunikationsgerät und die zweiten Kommunikationsgeräte dafür ausgestaltet und eingerichtet, einer Kommunikationsgerätegruppe zugeordnet zu werden. Dabei sind das erste Kommunikationsgerät und die zweiten Kommunikationsgeräte nur innerhalb derselben Kommunikationsgerätegruppe drahtlos miteinander verbindbar. Außerdem sind das erste Kommunikationsgerät und die zweiten Kommunikationsgeräte dafür ausgestaltet und eingerichtet, miteinander Datenrahmen auszutauschen, die mittels für ihre zugeordnete Kommunikationsgerätegruppe reservierter Funk-Ressourcen übertragen werden.

Das erste Kommunikationsgerät und die zweiten Kommunikationsgeräte sind erfindungsgemäß ferner dafür ausgestaltet und eingerichtet, innerhalb ihrer zugeordneten Kommunikationsgerätegruppe anhand von Signalstärkemesswerten bzw. Positionsdaten Abstände zwischen dem ersten Kommunikationsgerät und dem jeweiligen zweiten Kommunikationsgerät zu ermitteln. Darüber hinaus ist das erste Kommunikationsgerät dafür ausgestaltet und eingerichtet, für eine Funk-Kommunikation mit dem jeweiligen zweiten Kommunikationsgerät innerhalb der zugeordneten Kommunikationsgerätegruppe in Abhängigkeit von den ermittelten Abständen Funk-Ressourcen zuzuteilen. Die Funk-Ressourcen umfassen insbesondere Trägerfrequenzen, Bandbreite, Übertragungszeitfenster, Kommunikationsnetz-Partitionen bzw. Sendeleistung. Vorzugsweise ist das erste Kommunikationsgerät dafür ausgestaltet und eingerichtet, die Funk-Ressourcen adaptiv zuzuteilen. Beispielsweise können damit Zellengrößen in Mobilfunksystemen adaptiv verkleinert werden, je näher Kommunikationsteilnehmer innerhalb einer Gruppe zueinander sind. Zudem können auf diese Weise Interferenzen zwischen Kommunikationsgerätegruppen verringert werden. Insbesondere können mit abnehmendem Abstand der Kommunikationsgeräte innerhalb einer Kommunikationsgerätegruppe verbesserte Dienstgüteparameter (Quality of Service) realisiert werden.

Entsprechend einer bevorzugten Weiterbildung der vorliegenden Erfindung sind die zweiten Kommunikationsgeräte dafür ausgestaltet und eingerichtet, bei einem Anmeldevorgang an einem als Funk-Basisstation betriebenen ersten Kommunikationsgerät Angaben zu jeweils zugeordneten Produktionsaufträgen bzw. zu Automatisierungsaufgaben oder -funktionen an das erste Kommunikationsgerät zu übermitteln. Außerdem ist das erste Kommunikationsgerät dafür ausgestaltet und eingerichtet, in Abhängigkeit von den übermittelten Angaben zweite Kommunikationsgeräte zu seiner eigenen Kommunikationsgerätegruppe zuzuordnen oder Anmeldeanfragen zweiter Kommunikationsgeräte abzulehnen. Eine Zuordnung des jeweiligen ersten oder zweiten Kommunikationsgeräts zu einer Kommunikationsgerätegruppe kann beispielsweise auf Basis eines Status eines Produktionsauftrags, einer Automatisierungsaufgabe oder -funktion, einer Geräteposition bzw. eines vorgegebenen Zeitbereichs erfolgen.

Vorteilhafterweise können mehrere als Funk-Basisstation betreibbare Kommunikationsgeräte vorgesehen sein. Dabei sind die als Funk-Basisstation betreibbaren Kommunikationsgeräte dafür ausgestaltet und eingerichtet, weitere als Funk-Basisstation betreibbare Kommunikationsgeräte innerhalb ihrer Funk-Reichweite zu ermitteln und ermittelte Kommunikationsgeräte darauf zu überprüfen, ob diese derselben Kommunikationsgerätegruppe zugeordnet sind. Darüber hinaus sind die als Funk-Basisstation betreibbaren Kommunikationsgeräte in diesem Fall dafür ausgestaltet und eingerichtet, bei Vorhandensein weiterer als Funk-Basisstation betreibbarer Kommunikationsgeräte innerhalb ihrer Funk-Reichweite, die derselben Kommunikationsgerätegruppe zugeordnet sind, anhand einer Gerätekennung bzw. eines Prioritätswerts untereinander das als Funk-Basisstation betriebene erste Kommunikationsgerät auszuwählen.

Entsprechend einer weiteren vorteilhaften Ausgestaltung der vorliegenden Erfindung sind die als Funk-Basisstation betreibbaren Kommunikationsgeräte wahlweise als Funk-Teilnehmerstation betreibbar. Dabei ist nicht als erstes Kommunikationsgerät ausgewählten Kommunikationsgeräten jeweils eine Rolle als zweites Kommunikationsgerät zugeordnet. Darüber hinaus sind die als Funk-Basisstation betreibbaren Kommunikationsgeräte vorzugsweise dafür ausgestaltet und eingerichtet, bei einem Ausfall des ersten Kommunikationsgeräts und Vorhandensein weiterer als Funk-Basisstation betreibbarer Kommunikationsgeräte innerhalb ihrer Funk-Reichweite eine erneute Auswahl des als Funk-Basisstation betriebenen ersten Kommunikationsgeräts durchzuführen. Auf diese Weise stellt ein Ausfall einer Basisstation keinen Single Point of Failure mehr dar bzw. hat keine nachteiligen Auswirkungen auf benachbarte Funkzellen.

Des Weiteren ist das erste Kommunikationsgerät vorzugsweise dafür ausgestaltet und eingerichtet, für eine Funk-Kommunikation mit dem jeweiligen zweiten Kommunikationsgerät bei abnehmendem Abstand eine Verringerung der Sendeleistung, erhöhte Dienstgüteanforderungen bzw. geänderte Codier- bzw. Modulationsschemata vorzugeben oder zu steuern. Außerdem sind das erste Kommunikationsgerät und die zweiten Kommunikationsgeräte vorteilhafterweise dafür ausgestaltet und eingerichtet, miteinander Datenrahmen auszutauschen, die mittels für ihre zugeordnete Kommunikationsgerätegruppe exklusiv reservierter Funk-Ressourcen übertragen werden. Entsprechend einer weiteren vorteilhaften Ausgestaltung kann das erste Kommunikationsgerät dafür ausgestaltet und eingerichtet sein, nicht benötigte Funk-Ressourcen zur Nutzung durch andere Kommunikationsgerätegruppen freizugeben. Dies ermöglicht eine besonders effiziente Nutzung von Funk-Ressourcen.

Die erfindungsgemäße Funk-Basisstation ist für ein Kommunikationssystem entsprechend vorangehenden Ausführungen vorgesehen und umfasst zumindest eine Funk-Transceivereinheit, so dass die Funk-Basisstation drahtlos mit als Funk-Teilnehmerstationen betriebenen Kommunikationsgeräten verbindbar ist. Darüber hinaus ist die Funk-Basisstation auf einem Fahrzeug angeordnet oder verfahrbar sowie dafür ausgestaltet und eingerichtet, einer Kommunikationsgerätegruppe zugeordnet zu werden. Dabei ist die Funk-Basisstation nur innerhalb derselben Kommunikationsgerätegruppe mit als Funk-Teilnehmerstationen betriebenen Kommunikationsgeräten drahtlos verbindbar.

Erfindungsgemäß ist die Funk-Basisstation dafür ausgestaltet und eingerichtet, mit als Funk-Teilnehmerstationen betriebenen Kommunikationsgeräten Datenrahmen auszutauschen, die mittels für ihre zugeordnete Kommunikationsgerätegruppe reservierter Funk-Ressourcen übertragen werden. Außerdem ist die Funk-Basisstation dafür ausgestaltet und eingerichtet, innerhalb ihrer zugeordneten Kommunikationsgerätegruppe anhand von Signalstärkemesswerten bzw. Positionsdaten Abstände zu als Funk-Teilnehmerstationen betriebenen Kommunikationsgeräten zu ermitteln. Zusätzlich ist die Funk-Basisstation dafür ausgestaltet und eingerichtet, für eine Funk-Kommunikation mit dem jeweiligen als Funk-Teilnehmerstation betriebenen Kommunikationsgerät innerhalb der zugeordneten Kommunikationsgerätegruppe in Abhängigkeit von den ermittelten Abständen Funk-Ressourcen zuzuteilen.

Das erfindungsgemäße Verfahren ist zum Betrieb eines Funk-Kommunikationssystems entsprechend vorangehenden Ausführungen vorgesehen und umfasst zumindest ein als Funk-Basisstation betriebenes erstes Kommunikationsgerät, das zumindest eine Funk-Transceivereinheit aufweist, und mehrere als Funk-Teilnehmerstationen betriebene zweite Kommunikationsgeräte, die jeweils drahtlos mit dem ersten Kommunikationsgerät verbindbar sind und zumindest eine Funk-Transceivereinheit aufweisen. Das erste Kommunikationsgerät ist auf einem Fahrzeug angeordnet oder verfahrbar. Ferner sind das erste Kommunikationsgerät und die zweiten Kommunikationsgeräte einer Kommunikationsgerätegruppe zuordenbar und nur innerhalb derselben Kommunikationsgerätegruppe drahtlos miteinander verbindbar.

Entsprechend dem erfindungsgemäßen Verfahren tauschen das erste Kommunikationsgerät und die zweiten Kommunikationsgeräte miteinander Datenrahmen aus, die mittels für ihre zugeordnete Kommunikationsgerätegruppe reservierter Funk-Ressourcen übertragen werden. Außerdem ermitteln das erste Kommunikationsgerät und die zweiten Kommunikationsgeräte innerhalb ihrer zugeordneten Kommunikationsgerätegruppe anhand von Signalstärkemesswerten bzw. Positionsdaten Abstände zwischen dem ersten Kommunikationsgerät und dem jeweiligen zweiten Kommunikationsgerät. In Abhängigkeit von den ermittelten Abständen teilt das erste Kommunikationsgerät für eine Funk-Kommunikation mit dem jeweiligen zweiten Kommunikationsgerät innerhalb der zugeordneten Kommunikationsgerätegruppe Funk-Ressourcen zu.

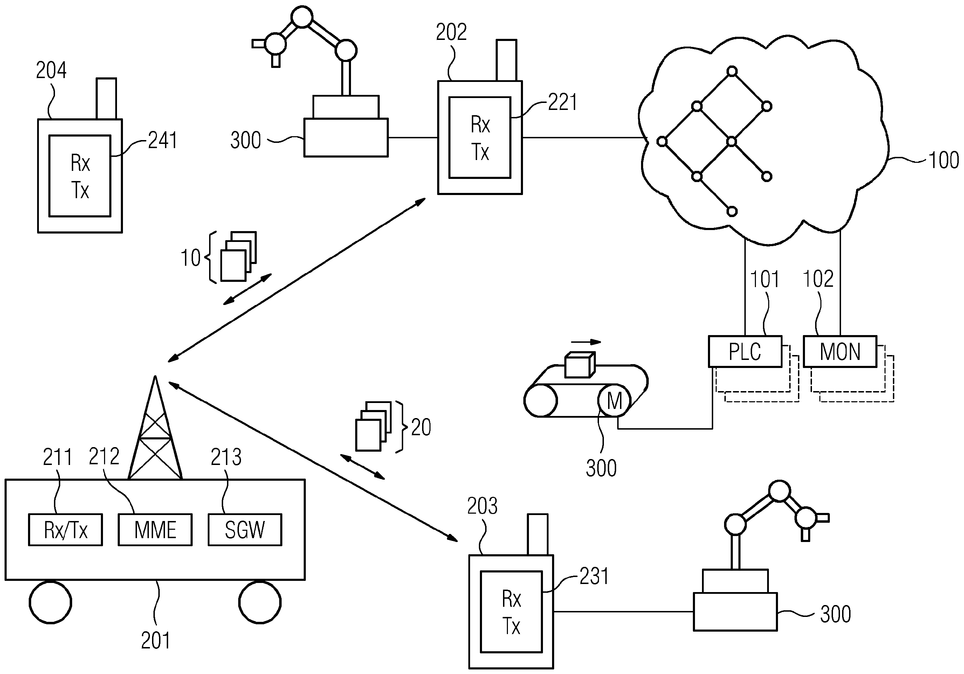

Die vorliegende Erfindung wird nachfolgend an einem Ausführungsbeispiel anhand der Zeichnung näher erläutert. Es zeigt die
- Figur: ein industrielles Automatisierungssystem mit einem Kommunikationsnetz und einem an dieses angeschlossenen Funk-Kommunikationssystem.

Das in der Figur dargestellte industrielle Automatisierungssystem umfasst ein Kommunikationsnetz 100, an das mehrere Automatisierungsgeräte 101, 102 und ein Funk-Kommunikationssystem angeschlossen sind. Das Funk-Kommunikationssystem umfasst im vorliegenden Ausführungsbeispiel eine Funk-Basisstation 201 und mehrere mit der Funk-Basisstation 201 drahtlos verbindbare Funk-Teilnehmerstationen 202-204. Dabei ist eine erste Funk-Teilnehmerstation 202 drahtgebunden mit dem Kommunikationsnetz 100 verbunden.

Das Kommunikationsnetz 100 umfasst eine Vielzahl von Netzknoten, an denen Netzinfrastrukturgeräte vorgesehen sind. Die Netzinfrastrukturgeräte 200-202 können beispielsweise Switche, Router oder Firewalls sein und zum Anschluss von Automatisierungsgeräten 101, 102 dienen. Zu Automatisierungsgeräten zählen insbesondere speicherprogrammierbaren Steuerungen 101, Eingabe/Ausgabe-Einheiten (I/O-Module) oder Bedien- und Beobachtungsstationen 102 des industriellen Automatisierungssystems. Zusätzlich kann das Kommunikationsnetz 100 auch Netzknoten mit einem Packet Data Network Gateway (PGW) und ein Home Subscriber Server (HSS) umfassen, die funktionell dem Funk-Kommunikationssystem zugeordnet sind.

Speicherprogrammierbare Steuerungen 101 umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über ihr Kommunikationsmodul kann eine speicherprogrammierbare Steuerung 101 beispielsweise mit einem Switch oder Router oder zusätzlich mit einem Feldbus verbunden werden. Die Eingabe/AusgabeEinheit dient einem Austausch von Steuerungs- und Messgrößen zwischen einer speicherprogrammierbaren Steuerung 101 und einem mit der speicherprogrammierbaren Steuerung 101 verbundenen Sensor bzw. einer gesteuerten Maschine oder Anlage 300. Ein Sensor bzw. eine Maschine oder Anlage 300 kann grundsätzlich auch über das Funk-Kommunikationssystem mit einer speicherprogrammierbaren Steuerung 101 verbunden werden. Die Zentraleinheit einer speicherprogrammierbaren Steuerung 101 ist insbesondere für eine Ermittlung geeigneter Steuerungsgrößen aus erfassten Messgrößen vorgesehen. Obige Komponenten einer speicherprogrammierbaren Steuerung 101 können beispielsweise über ein Rückwandbus-System miteinander verbunden werden.

Eine Bedien- und Beobachtungsstation 102 dient insbesondere zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 102 zur Anzeige von Werten eines Regelungskreises und zur Veränderung von Regelungsparametern verwendet. Bedien- und Beobachtungsstationen 102 umfassen zumindest eine graphische Benutzerschnittstelle, ein Eingabegerät, eine Prozessoreinheit und ein Kommunikationsmodul.

Sowohl die Funk-Basisstation 201 als auch die Funk-Teilnehmerstationen 202, 203 umfassen jeweils neben einer Antennenanordnung eine Funk-Transceivereinheit 211, 221, 231, 241 mit einer PHY- und einer MAC-Funktionseinheit. Die Funk-Basisstation 201 und die Funk-Teilnehmerstationen 202-204 können beispielsweise einem Wireless Local Area Network, einem WiMAX-, einem UMTS-, einem LTE-, einem 5G-Mobilfunknetz oder einem sonstigen Mobilfunknetz zugeordnet sein. Darüber hinaus sind die Funk-Basisstation 201 einerseits und die Funk-Teilnehmerstationen 202-204 andererseits grundsätzlich dafür ausgestaltet und eingerichtet, über die Funk-Basisstation 201 Datenrahmen 10, 20 auszutauschen. Die Datenrahmen 10, 20 umfassen im vorliegenden Ausführungsbeispiel insbesondere Prozessdaten bzw. Mess- und Steuerungsgrößen, die mit der Funk-Basisstation 201 bzw. mit den Funk-Teilnehmerstationen 202, 203 verbundenen Fahrzeugen bzw. Sensoren, Maschinen oder Anlagen 300 zugeordnet sind. Vorzugsweise sind die Funk-Basisstation und die Funk-Teilnehmerstationen für eine CSMA-Kollisionsvermeidung und zur Anwendung von Listen Before Talk ausgestaltet und eingerichtet.

Im vorliegenden Ausführungsbeispiel ist die Funk-Basisstation 201 auf einem Fahrzeug angeordnet bzw. verfahrbar. Beispielsweise kann ein solches Fahrzeug ein Automated Guided Vehicle sein, das von einem der ersten Funk-Teilnehmerstation 202 zugeordneten ersten Roboter Werkstücke entgegennimmt und zur weiteren Bearbeitung zu einem zweiten Roboter transportiert, der einer zweiten Funk-Teilnehmerstation 203 zugeordnet ist. Grundsätzlich können die Funk-Basisstation 201 und die Funk-Teilnehmerstationen 202-204 jeweils zu einer Kommunikationsgerätegruppe zugeordnet werden. Dabei sind die Funk-Basisstation 201 und die Funk-Teilnehmerstationen 202-204 jedoch nur innerhalb derselben Kommunikationsgerätegruppe drahtlos miteinander verbindbar. Insbesondere sind die Funk-Basisstation 201 und die Funk-Teilnehmerstationen 202-204 dafür ausgestaltet und eingerichtet, miteinander Datenrahmen 10, 20 auszutauschen, die mittels für ihre zugeordnete Kommunikationsgerätegruppe exklusiv reservierter Funk-Ressourcen übertragen werden.

Eine Zuordnung von Funk-Basisstationen oder Funk-Teilnehmerstationen zu einer Kommunikationsgerätegruppe kann beispielsweise auf Basis eines Status eines Produktionsauftrags, einer Automatisierungsaufgabe oder -funktion, einer Geräteposition bzw. eines vorgegebenen Zeitbereichs erfolgen. Im vorliegenden Ausführungsbeispiel werden die Funk-Basisstation 201 sowie die erste Funk-Teilnehmerstation 202 und die zweite Funk-Teilnehmerstation 203 aufgrund obiger Transport- bzw. Automatisierungsaufgabe zur selben Kommunikationsgerätegruppe zugeordnet, die jedoch insbesondere nicht die Funk-Teilnehmerstation 204 umfasst.

Die Funk-Basisstation 201 und die Funk-Teilnehmerstationen 202, 203 ermitteln innerhalb ihrer Kommunikationsgerätegruppe anhand von Signalstärkemesswerten bzw. Positionsdaten Abstände zwischen der Funk-Basisstation 201 und der jeweiligen Funk-Teilnehmerstation 202, 203. Des Weiteren ist die Funk-Basisstation 201 dafür ausgestaltet und eingerichtet, für eine Funk-Kommunikation mit der jeweiligen Funk-Teilnehmerstation 202, 203 innerhalb ihrer Kommunikationsgerätegruppe in Abhängigkeit von den ermittelten Abständen Funk-Ressourcen adaptiv zuzuteilen. Die Funk-Ressourcen umfassen beispielsweise Trägerfrequenzen, Bandbreite, Übertragungszeitfenster, Kommunikationsnetz-Partitionen bzw. Sendeleistung. Darüber hinaus ist die Funk-Basisstation 201 zur Bearbeitung eines Mobility Management Entity (MME) und eines Serving Gateway (SGW) Protokollstacks ausgebildet und eingerichtet. Dementsprechend umfasst die Funk-Basisstation 201 eine MME-Funktionseinheit 212 und eine SGW-Funktionseinheit 213.

Die Funk-Basisstation 201 ist insbesondere dafür konfiguriert, für eine Funk-Kommunikation mit der jeweiligen Funk-Teilnehmerstation 202, 203 bei abnehmendem Abstand eine Verringerung der Sendeleistung, erhöhte Dienstgüteanforderungen und geänderte Codier- bzw. Modulationsschemata vorzugeben oder zu steuern. Außerdem ist die Funk-Basisstation 201 vorzugsweise dafür ausgestaltet und eingerichtet ist, nicht benötigte Funk-Ressourcen zur Nutzung durch andere Kommunikationsgerätegruppen freizugeben.

Die Funk-Teilnehmerstationen 202-204 sind im vorliegenden Ausführungsbeispiel dafür ausgestaltet und eingerichtet sind, bei einem Anmeldevorgang an einer Funk-Basisstation Angaben zu jeweils zugeordneten Produktionsaufträgen bzw. Automatisierungsaufgaben oder -funktionen an die Funk-Basisstation zu übermitteln. Dementsprechend ist die Funk-Basisstation 201 dafür ausgestaltet und eingerichtet ist, in Abhängigkeit von den übermittelten Angaben Funk-Teilnehmerstationen zu seiner eigenen Kommunikationsgerätegruppe zuzuordnen oder Anmeldeanfragen von Funk-Teilnehmerstationen abzulehnen.

Sind mehrere als Funk-Basisstation betreibbare Kommunikationsgeräte vorgesehen, ermitteln als Funk-Basisstation betreibbaren Kommunikationsgeräte innerhalb ihrer Funk-Reichweite weitere als Funk-Basisstation betreibbare Kommunikationsgeräte. Die ermittelten Kommunikationsgeräte werden dann darauf überprüft, ob sie derselben Kommunikationsgerätegruppe zugeordnet sind. Bei Vorhandensein weiterer als Funk-Basisstation betreibbarer Kommunikationsgeräte innerhalb ihrer Funk-Reichweite wählen die als Funk-Basisstation betreibbaren Kommunikationsgeräte, die derselben Kommunikationsgerätegruppe zugeordnet sind, anhand einer Gerätekennung bzw. eines Prioritätswerts untereinander das als Funk-Basisstation betriebene erste Kommunikationsgerät aus. Kommunikationsgeräten, die wahlweise als Funk-Basisstation oder als Funk-Teilnehmerstation betreibbar sind, wird vorzugsweise eine Rolle als Funk-Teilnehmerstation zugeordnet, sofern ihnen nach obiger Auswahl keine Rolle als Funk-Basisstation zukommt. Vorteilhafterweise sind die als Funk-Basisstation betreibbaren Kommunikationsgeräte dafür ausgestaltet und eingerichtet, bei einem Ausfall der ausgewählten Funk-Basisstation und Vorhandensein weiterer als Funk-Basisstation betreibbarer Kommunikationsgeräte innerhalb ihrer Funk-Reichweite eine erneute Auswahl des als Funk-Basisstation betriebenen Kommunikationsgeräts durchzuführen.

## Patentansprüche

1. Funk-Kommunikationssystem für ein industrielles Automatisierungssystem mit
- zumindest einem als Funk-Basisstation betriebenen ersten Kommunikationsgerät (201), das zumindest eine Funk-Transceivereinheit (211) umfasst,
- mehreren als Funk-Teilnehmerstationen betriebenen zweiten Kommunikationsgeräten (202-204), die jeweils drahtlos mit dem ersten Kommunikationsgerät verbindbar sind und zumindest eine Funk-Transceivereinheit (221, 231, 241) umfassen,
**dadurch gekennzeichnet, dass**
- das erste Kommunikationsgerät auf einem Fahrzeug angeordnet oder verfahrbar ist,
- das erste Kommunikationsgerät und die zweiten Kommunikationsgeräte dafür ausgestaltet und eingerichtet sind, einer Kommunikationsgerätegruppe zugeordnet zu werden,
- das erste Kommunikationsgerät und die zweiten Kommunikationsgeräte nur innerhalb derselben Kommunikationsgerätegruppe drahtlos miteinander verbindbar sind,
- das erste Kommunikationsgerät und die zweiten Kommunikationsgeräte dafür ausgestaltet und eingerichtet sind, miteinander Datenrahmen (10, 20) auszutauschen, die mittels für ihre zugeordnete Kommunikationsgerätegruppe reservierter Funk-Ressourcen übertragen werden,
- das erste Kommunikationsgerät und die zweiten Kommunikationsgeräte dafür ausgestaltet und eingerichtet sind, innerhalb ihrer zugeordneten Kommunikationsgerätegruppe anhand von Signalstärkemesswerten und/oder Positionsdaten Abstände zwischen dem ersten Kommunikationsgerät und dem jeweiligen zweiten Kommunikationsgerät zu ermitteln,
- das erste Kommunikationsgerät dafür ausgestaltet und eingerichtet ist, für eine Funk-Kommunikation mit dem jeweiligen zweiten Kommunikationsgerät innerhalb der zugeordneten Kommunikationsgerätegruppe in Abhängigkeit von den ermittelten Abständen Funk-Ressourcen zuzuteilen.

2. Kommunikationssystem nach Anspruch 1,
bei dem die zweiten Kommunikationsgeräte dafür ausgestaltet und eingerichtet sind, bei einem Anmeldevorgang an einem als Funk-Basisstation betriebenen ersten Kommunikationsgerät Angaben zu jeweils zugeordneten Produktionsaufträgen und/oder Automatisierungsaufgaben oder -funktionen an das erste Kommunikationsgerät zu übermitteln, und bei dem das erste Kommunikationsgerät dafür ausgestaltet und eingerichtet ist, in Abhängigkeit von den übermittelten Angaben zweite Kommunikationsgeräte zu seiner eigenen Kommunikationsgerätegruppe zuzuordnen oder Anmeldeanfragen zweiter Kommunikationsgeräte abzulehnen.

3. Kommunikationssystem nach einem der Ansprüche 1 oder 2,
bei dem eine Zuordnung des jeweiligen ersten oder zweiten Kommunikationsgeräts zu einer Kommunikationsgerätegruppe auf Basis eines Status eines Produktionsauftrags, einer Automatisierungsaufgabe oder -funktion, einer Geräteposition und/oder eines vorgegebenen Zeitbereichs erfolgt.

4. Kommunikationssystem nach einem der Ansprüche 1 bis 3,
bei dem mehrere als Funk-Basisstation betreibbare Kommunikationsgeräte vorgesehen sind, bei dem die als Funk-Basisstation betreibbaren Kommunikationsgeräte dafür ausgestaltet und eingerichtet sind, weitere als Funk-Basisstation betreibbare Kommunikationsgeräte innerhalb ihrer Funk-Reichweite zu ermitteln und ermittelte Kommunikationsgeräte darauf zu überprüfen, ob diese derselben Kommunikationsgerätegruppe zugeordnet sind, und bei dem die als Funk-Basisstation betreibbaren Kommunikationsgeräte dafür ausgestaltet und eingerichtet sind, bei Vorhandensein weiterer als Funk-Basisstation betreibbarer Kommunikationsgeräte innerhalb ihrer Funk-Reichweite, die derselben Kommunikationsgerätegruppe zugeordnet sind, anhand einer Gerätekennung und/oder eines Prioritätswerts untereinander das als Funk-Basisstation betriebene erste Kommunikationsgerät auszuwählen.

5. Kommunikationssystem nach Anspruch 4,
bei dem die als Funk-Basisstation betreibbaren Kommunikationsgeräte wahlweise als Funk-Teilnehmerstation betreibbar sind und bei dem nicht als erstes Kommunikationsgerät ausgewählten Kommunikationsgeräten jeweils eine Rolle als zweites Kommunikationsgerät zugeordnet ist.

6. Kommunikationssystem nach einem der Ansprüche 4 oder 5,
bei dem die als Funk-Basisstation betreibbaren Kommunikationsgeräte dafür ausgestaltet und eingerichtet sind, bei einem Ausfall des ersten Kommunikationsgeräts und Vorhandensein weiterer als Funk-Basisstation betreibbarer Kommunikationsgeräte innerhalb ihrer Funk-Reichweite eine erneute Auswahl des als Funk-Basisstation betriebenen ersten Kommunikationsgeräts durchzuführen.

7. Kommunikationssystem nach einem der Ansprüche 1 bis 6,
bei dem die Funk-Ressourcen Trägerfrequenzen, Bandbreite, Übertragungszeitfenster, Kommunikationsnetz-Partitionen und/oder Sendeleistung umfassen.

8. Kommunikationssystem nach Anspruch 7,
bei dem das erste Kommunikationsgerät dafür ausgestaltet und eingerichtet ist, die Funk-Ressourcen adaptiv zuzuteilen.

9. Kommunikationssystem nach einem der Ansprüche 7 oder 8,
bei dem das erste Kommunikationsgerät dafür ausgestaltet und eingerichtet ist, für eine Funk-Kommunikation mit dem jeweiligen zweiten Kommunikationsgerät bei abnehmendem Abstand eine Verringerung der Sendeleistung, erhöhte Dienstgüteanforderungen und/oder geänderte Codier- und/oder Modulationsschemata vorzugeben oder zu steuern.

10. Kommunikationssystem nach einem der Ansprüche 1 bis 9,
bei dem das erste Kommunikationsgerät und die zweiten Kommunikationsgeräte dafür ausgestaltet und eingerichtet sind, miteinander Datenrahmen (10, 20) auszutauschen, die mittels für ihre zugeordnete Kommunikationsgerätegruppe exklusiv reservierter Funk-Ressourcen übertragen werden.

11. Kommunikationssystem nach einem der Ansprüche 1 bis 10,
bei dem das erste Kommunikationsgerät dafür ausgestaltet und eingerichtet ist, nicht benötigte Funk-Ressourcen zur Nutzung durch andere Kommunikationsgerätegruppen freizugeben.

12. Kommunikationssystem nach einem der Ansprüche 1 bis 11,
bei dem das erste Kommunikationsgerät und die zweiten Kommunikationsgeräte für eine CSMA-Kollisionsvermeidung und/oder zur Anwendung von Listen Before Talk ausgestaltet und eingerichtet sind.

13. Kommunikationssystem nach einem der Ansprüche 1 bis 14,
bei dem das erste Kommunikationsgerät und die zweiten Kommunikationsgeräte einem Wireless Local Area Network, einem WiMAX-, einem UMTS-, einem LTE-, einem 5G-Mobilfunknetz oder einem sonstigen Mobilfunknetz zugeordnet sind.

14. Kommunikationssystem nach einem der Ansprüche 1 bis 13,
bei dem das erste Kommunikationsgerät zur Bearbeitung eines Mobility Management Entity und/oder Serving Gateway Protokollstacks ausgebildet und eingerichtet ist.

15. Funk-Basisstation für ein Kommunikationssystem nach einem der Ansprüche 1 bis 14 mit
- zumindest einer Funk-Transceivereinheit (211),
- wobei die Funk-Basisstation (201) drahtlos mit als Funk-Teilnehmerstationen betriebenen Kommunikationsgeräten (202-204) verbindbar ist,
**dadurch gekennzeichnet, dass**
- die Funk-Basisstation auf einem Fahrzeug angeordnet oder verfahrbar ist,
- Funk-Basisstation dafür ausgestaltet und eingerichtet ist, einer Kommunikationsgerätegruppe zugeordnet zu werden, wobei die Funk-Basisstation nur innerhalb derselben Kommunikationsgerätegruppe mit als Funk-Teilnehmerstationen betriebenen Kommunikationsgeräten drahtlos verbindbar ist,
- die Funk-Basisstation dafür ausgestaltet und eingerichtet ist, mit als Funk-Teilnehmerstationen betriebenen Kommunikationsgeräten Datenrahmen (10, 20) auszutauschen, die mittels für ihre zugeordnete Kommunikationsgerätegruppe reservierter Funk-Ressourcen übertragen werden,
- die Funk-Basisstation dafür ausgestaltet und eingerichtet ist, innerhalb ihrer zugeordneten Kommunikationsgerätegruppe anhand von Signalstärkemesswerten und/oder Positionsdaten Abstände zu als Funk-Teilnehmerstationen betriebenen Kommunikationsgeräten zu ermitteln,
- die Funk-Basisstation dafür ausgestaltet und eingerichtet ist, für eine Funk-Kommunikation mit dem jeweiligen als Funk-Teilnehmerstation betriebenen Kommunikationsgerät innerhalb der zugeordneten Kommunikationsgerätegruppe in Abhängigkeit von den ermittelten Abständen Funk-Ressourcen zuzuteilen.

16. Verfahren zum Betrieb eines Funk-Kommunikationssystems für ein industrielles Automatisierungssystem nach einem der Ansprüche 1 bis 14, bei dem
- das Funk-Kommunikationssystem zumindest ein als Funk-Basisstation betriebenes erstes Kommunikationsgerät (201), das zumindest eine Funk-Transceivereinheit (211) aufweist, und
- mehrere als Funk-Teilnehmerstationen betriebene zweite Kommunikationsgeräte (202-204) umfasst, die jeweils drahtlos mit dem ersten Kommunikationsgerät verbindbar sind und zumindest eine Funk-Transceivereinheit (221, 231, 241) aufweisen,
**dadurch gekennzeichnet, dass**
- das erste Kommunikationsgerät auf einem Fahrzeug angeordnet oder verfahrbar ist,
- das erste Kommunikationsgerät und die zweiten Kommunikationsgeräte einer Kommunikationsgerätegruppe zuordenbar und nur innerhalb derselben Kommunikationsgerätegruppe drahtlos miteinander verbindbar sind,
- das erste Kommunikationsgerät und die zweiten Kommunikationsgeräte miteinander Datenrahmen (10, 20) austauschen, die mittels für ihre zugeordnete Kommunikationsgerätegruppe reservierter Funk-Ressourcen übertragen werden,
- das erste Kommunikationsgerät und die zweiten Kommunikationsgeräte innerhalb ihrer zugeordneten Kommunikationsgerätegruppe anhand von Signalstärkemesswerten und/oder Positionsdaten Abstände zwischen dem ersten Kommunikationsgerät und dem jeweiligen zweiten Kommunikationsgerät ermitteln,
- das erste Kommunikationsgerät für eine Funk-Kommunikation mit dem jeweiligen zweiten Kommunikationsgerät innerhalb der zugeordneten Kommunikationsgerätegruppe in Abhängigkeit von den ermittelten Abständen Funk-Ressourcen zuteilt.
